# EUROPÄISCHE PATENTSCHRIFT

(11) **EP 3 189 913 B1**
(45) Veröffentlichungstag und Bekanntmachung des Hinweises auf die Patenterteilung: **22.05.2019**
(21) Anmeldenummer: 16150561.5
(22) Anmeldetag: 08.01.2016
(51) Int. Cl.: B22D 35/00, B22D 39/00, B22D 1/00, C03B 7/16, F27D 3/14, F27D 25/00, B22D 37/00

(54) **VORRICHTUNG UND VERFAHREN ZUM DOSIEREN VON GESCHMOLZENEM WERKSTOFF**
METHOD AND DEVICE FOR DOSING MOLTEN MATERIAL
DISPOSITIF ET PROCEDE DE DOSAGE DE MATIERE FONDUE

(43) Veröffentlichungstag der Anmeldung: 12.07.2017
(73) Patentinhaber: StrikoWestofen GmbH, 51643 Gummersbach (DE)
(72) Erfinder: KULAWIK, Florian, 67655 Kaiserslautern (DE); HILLEN, Rudolf, 51643 Gummersbach (DE)
(74) Vertreter: Pfenning, Meinig & Partner mbB

(56) Entgegenhaltungen:
- DE-A1-102009 037 368

## Beschreibung

Die Erfindung liegt auf dem Gebiet des Maschinenbaus und der Werkstofftechnik sowie der Verfahrenstechnik. Sie ist mit besonderem Vorteil bei Verfahren einsetzbar, bei denen ein geschmolzener Werkstoff diskontinuierlich von einem Ofen zu einem Behälter gefördert wird. Dies gilt beispielsweise auf dem Gebiet der Metallverarbeitung bei sogenannten Dosieröfen für das Dosieren flüssigen Metalls in eine Gussform. Bei diesen Dosieröfen wird das flüssige Metall durch ein Steigrohr gedrückt und fließt dann über die Steigrohrkante in eine Auslaufrinne.

Es sind aus dem Stand der Technik druckgasbeaufschlagte Dosieröfen, üblicherweise für geschmolzenes Metall, bekannt, wie sie beispielsweise in der DE 2022989 beschrieben sind. Es wird bei solchen Dosieröfen üblicherweise ein druckdichtes Gefäß als Schmelzebehälter verwendet, in den ein Steigrohr druckdicht eingesetzt ist, wobei das Steigrohr in das geschmolzene Metall hineinragt. Durch Druckbeaufschlagung des flüssigen Metallspiegels, üblicherweise mit einem Gas, wird das flüssige Metall durch das Steigrohr aus dem Behälter heraus und in eine Auslaufrinne gedrückt. Der Gasdruck in dem Schmelzebehälter kann unter Einsatz entsprechender Gasdrucksensoren geregelt werden, um die Abgabegeschwindigkeit zu regeln und jeweils Anfang und Ende eines Dosiervorgangs zu steuern. Mittels solcher Verfahren kann auch die abzugebende Menge des geschmolzenen Metalls bestimmt werden. Entsprechende Dosierverfahren sind auch aus der DE 40 29 386 A1 und der EP 0 946 314 B1 bekannt.

Unter dem Einfluss der Schwerkraft fließt das Metall bei solchen Dosieröfen durch die Auslaufrinne und durch ein oder mehrere weitere Rinnenelemente (Zuführrinnen) beispielsweise zu einer Gussform. Bei anderen Verfahren wird der Ofen über ein Ventil, zum Beispiel eine Stopfenstange teilweise entleert, so dass das Metall von oben oder von der Seite in eine Rinne zur Gussform einströmt. In allen Fällen wird der Werkstofffluss zum Ende des Dosiervorgangs abgebrochen, so dass der Fluss durch die Rinnen oder Rinnenelemente sich zunächst verringert und dann versiegt. Dabei wird der flüssige Werkstoff zuerst zähflüssig und erstarrt dann, und üblicherweise verbleibt eine Restmenge als Metallfaden in den Rinnen oder Rinnenelementen. Entsprechende Ablagerungen können sich durch wiederholte Dosiervorgänge aufbauen und grundsätzlich unvorhersehbar bei einem Dosiervorgang wegbrechen oder weggespült werden, was zu schwankenden Dosiermengen führt. Ferner können Oxidhäute des Metallfadens in die Gießform oder in eine Füllkammer einer Druckgießmaschine geraten. Es kann somit zu oxydischen Einschlüssen im Gussteil und im Extremfall zu Ausschussteilen kommen.

Aus der deutschen Offenlegungsschrift DE 10 2009 037 368 A1 ist zur Beseitigung von Ablagerungen an der Ablaufkante (Steigrohrkante) und in der Auslaufrinne bereits ein Verfahren bekannt, bei dem zumindest Teile des Bereichs der Kante kontinuierlich und/oder impulsartig zur Freihaltung von Ablagerungen des Metalls beblasen werden.

Der vorliegenden Erfindung liegt vor dem Hintergrund des Standes der Technik die Aufgabe zugrunde, die Dosiergenauigkeit oder die Qualität des dosierten Materials weiter zu erhöhen.

Die Aufgabe wird mit den Merkmalen der Erfindung gemäß Patentanspruch 1 im Rahmen einer Vorrichtung und mit den Merkmalen des Patentanspruchs 10 im Rahmen eines Verfahrens gelöst. Die Unteransprüche 2 bis 9 und 11 bis 13 zeigen Ausgestaltungen der Erfindung auf.

Demgemäß bezieht sich die Erfindung auf eine Vorrichtung zum Dosieren oder diskontinuierlichen Fördern von flüssigem oder geschmolzenem Werkstoff, insbesondere Metall, mit einem oder mehreren Rinnenelementen zur Leitung des Werkstoffs. Die Rinnenelemente können im Verlauf des Werkstoffflusses hintereinander angeordnet sein. Dabei ist vorgesehen, dass an mindestens einem der Rinnenelemente, an seinem/ihrem Boden wenigstens eine Beblasungsdüse angeordnet ist. Diese kann derart ausgerichtet sein, dass die Beblasungsrichtung in Richtung des Bodens der Rinnenelemente oder parallel zum Boden der Rinnenelemente weist.

Die Erfindung ist beim Dosieren von Metall mit Vorteil anwendbar, jedoch ist grundsätzlich eine Anwendung auch bei der Dosierung anderer Materialien denkbar, die nach dem Dosieren in Rinnenelementen erstarren können, wie beispielsweise gießbare Kunststoffe.

Der Werkstoff wird üblicherweise in einem Schmelzebehälter oder einem anderen Behälter in flüssiger Form bevorratet. Er wird beispielsweise über eine Druckgasbeaufschlagung durch ein in den Flüssigkeitspegel eintauchendes Steigrohr aus dem Behälter hinausbefördert. Das Steigrohr mündet außerhalb des Behälters zu einer Auslaufkante hin, an der ein Rinnenelement in Form einer Auslaufrinne beginnt, die in eine Förderrinne mit einem oder mehreren Rinnenelementen übergeht. Bei anderen Verfahren wird der Anfang der Förderrinne von oben oder von der Seite mit flüssigem Werkstoff gefüllt. Auslauf- und/ oder Förderrinne sind üblicherweise mit einem fallenden Längsverlauf versehen, so dass durch die Wirkung der Schwerkraft der Werkstoff durch die Rinnenelemente von der Auslaufkante weg zu einem Verwendungsort des Werkstoffs fließt.

Bleibt nach dem Ende einer Dosierung oder diskontinuierlichen Förderung des Werkstoffs ein Rest des Werkstoffs in einem oder mehreren Rinnenelementen der Auslauf- oder Förderrinne stehen und wird dort langsam zähflüssig, so kann durch Beblasung mittels der einen oder mehreren, vorzugsweise in Längsrichtung der Rinnenelemente mit Abstand hintereinander angeordneten Beblasungsdüsen der verbleibende Werkstoff vom Boden der Auslaufrinne oder der Förderrinne weggeblasen und entfernt werden, um bei zukünftigen Dosiervorgängen nicht weiter zu stören. Die Beblasungsdüse mündet in oder an einem Rinnenelement der Auslauf- oder Förderrinne, vorzugsweise an deren Boden und ist weiter vorzugsweise in Längsrichtung der Rinne gerichtet. Bei Anordnung von mehreren Beblasungsdüsen nebeneinander an derselben Stelle im Verlauf des Werkstoffflusses ist die Anordnung in Querrichtung der Rinnenelemente vorzugsweise symmetrisch zu deren Symmetrieachse.

Zur Auswahl des Zeitpunkts der Beblasung sind weiter unten weitere Ausführungen im Zuge der Beschreibung des erfindungsgemäßen Verfahrens gemacht.

Eine vorteilhafte Ausgestaltung kann vorsehen, dass die Beblasungsdüse(n) in einem Bereich der Rinnenelemente angeordnet ist/sind, der im Betrieb von dem fließenden Werkstoff bedeckt ist und der insbesondere unterhalb des fließenden Werkstoffs liegt. Durch eine Beblasung des Werkstoffs von der Unterseite oder der Stirnseite des Werkstoffs her kann der erstarrende Rest des Werkstoffs besonders einfach weggeblasen werden.

Eine besondere Ausführungsform kann dabei vorsehen, dass die Mündung(en) der Beblasungsdüse(n) derart ausgerichtet ist/sind, dass ein durch sie ausgestoßener Fluidstrom im Wesentlichen in Längsrichtung der Rinnenelemente und im Richtungssinn des Werkstoffflusses ausgestoßen wird.

Dabei kann auch vorgesehen sein, dass die Mündung(en) der Beblasungsdüse(n) derart ausgerichtet ist/sind, dass die Richtung eines durch sie ausgestoßenen Fluidstroms von der Längsrichtung der Rinnenelemente in Werkstoffflussrichtung höchstens um einen Winkel abweicht, der kleiner als 15 Grad, vorzugsweise kleiner als 5 Grad ist, wobei die Richtung des Fluidstroms insbesondere zum Boden der Rinnenelemente gerichtet ist.

Im Idealfall löst sich bei Beblasung der Metallfaden aus der aus einem oder mehreren Rinnenelementen bestehenden Rinne zu einem Zeitpunkt, zu dem der geschmolzene Werkstoff noch gut verformbar ist, zu dem jedoch der in der Rinne verbleibende Materialfaden bereits wenigstens teilweise zusammenhängt. Durch eine Beblasung von unten in Längsrichtung der Rinne kann dieser Werkstofffaden gut aus der Rinne im Ganzen oder in großen Teilen wegbewegt werden. Eine Beblasung in einem oberen Bereich der Rinne - in Strömungsrichtung des Werkstoffflusses gesehen stromaufwärts - ist hierzu besonders vorteilhaft.

Es kann zudem auch vorgesehen sein, dass die Beblasung etwa in Längsrichtung der Auslaufrinne, jedoch leicht schräg nach unten zum Boden der Auslaufrinne gerichtet ist, um eine besonders effiziente Entfernung des Werkstofffadens/Metallfadens aus der Rinne zu erreichen.

Es kann bei der Erfindung zudem vorgesehen sein, dass die aus Rinnenelementen gebildete Auslauf- und/ oder die Förderrinne im Verlauf ihres Bodens in Werkstoffflussrichtung eine oder mehrere fallende Stufen aufweist und dass wenigstens eine Beblasungsdüse an einer Stufe angeordnet ist. Hierzu können die Rinnenelemente im Verlauf ihres Bodens in Werkstoffflussrichtung eine oder mehrere fallende Stufen aufweisen oder zwischen den Rinnenelementen können Stufen vorgesehen sein und wenigstens eine Beblasungsdüse kann an einer Stufe angeordnet sein.

Dabei kann konkret vorgesehen sein, dass an einer oder mehreren Stufen jeweils eine Beblasungsdüse an der fallenden Stufenflanke mündet. Derartige Stufen bilden in dem grundsätzlich fallenden Verlauf der Rinnenelemente steile senkrechte oder schräge Flanken, an denen Beblasungsdüsen besonders einfach und wirkungsvoll angeordnet werden können. Die Beblasungsdüsen können dann jeweils an der Stirnseite der Stufenflanke, beispielseise zwischen zwei in diesem Bereich aufeinanderliegenden Rinnenelementen münden und den Beblasungsstrahl parallel zum weiteren Verlauf der Rinnenelemente ausrichten. Damit ist eine Beblasung einerseits von der Unterseite des Werkstoffrests her möglich und andererseits in Längsrichtung des nachfolgenden Rinnenelementes. Idealerweise ergibt sich dadurch eine Kraftwirkung auf den verbleibenden Werkstofffaden sowohl vom Boden der Rinnenelemente weg nach oben als auch in Längsrichtung des Werkstofffadens, so dass dieser, beginnend im stromaufwärts (bezüglich des Werkstoffflusses) gelegenen Bereich der Rinnenelemente, aufgerollt wird und sich zusammenhängend von der Düse weg in Längsrichtung der Rinnenelemente bewegt.

Es kann dabei vorgesehen sein, dass ein erstes Rinnenelement in ein von diesem aus gesehen in Werkstoffflussrichtung weiter stromabwärts liegendes Rinnenelement eingesteckt oder auf dieses aufgelegt ist. Das erste Rinnenelement kann beispielsweise die kurze Auslaufrinne des Steigrohres des Ofens sein. Im Übergangsbereich zwischen dem ersten Rinnenelement und einem weiter stromabwärts liegenden Rinnenelement ist das Ende des ersten Rinnenelements in das weitere Rinnenelement eingesteckt, so dass hier auf natürlichem Wege eine Stufe entsteht. Unter dem Boden des ersten Rinnenelements kann dann an dessen Stirnseite die Mündung einer Beblasungsdüse angeordnet sein, die in Längsrichtung des zweiten Rinnenelements gerichtet ist.

Der Begriff der Rinnenelemente kann im Rahmen dieser Anmeldung auch Rohrelemente mit umfassen.

Es kann zudem vorgesehen sein, dass die Düse(n) im Querchnitt schlitzförmig ausgebildet ist/sind, wobei insbesondere der Schlitz gekrümmt ist und wobei der Schlitz weiter insbesondere in derselben Richtung gekrümmt ist wie im Querschnitt der Boden der Auslaufrinne. Die schlitzförmige Düse kann beispielsweise V-förmig oder kreisbogenförmig ausgebildet sein. Eine derartige Düse kann auch in mehrere unmittelbar nebeneinander liegende Düsenöffnungen unterteilt sein.

Die Erfindung bezieht sich außerdem auf eine Vorrichtung, die einen Behälter mit einem in den im Behälter befindlichen Werkstoff hineinragenden Steigrohr sowie mit einer Vorrichtung zur Förderung des Werkstoffes durch das Steigrohr und mit einem ersten Rinnenelement in Form einer Auslaufrinne für den Werkstoff aufweist, der von dem Dosierrohr über eine Auslaufkante zu weiteren Rinnenelementen führt.

Zudem bezieht sich die Erfindung auf ein Verfahren zum diskontinuierlichen Fördern oder Dosieren eines geschmolzenen, insbesondere metallischen Werkstoffs. Es ist dabei vorgesehen, dass der geschmolzene Werkstoff durch ein oder mehrere Rinnenelemente geleitet wird, dass der Werkstofffluss unterbrochen wird und dass darauf folgend und vor dem vollständigen Erstarren von Werkstoff in oder an wenigstens einem Rinnenelement ein Beblasungsimpuls durch eine an einem Boden mindestens eines der Rinnenelemente angeordnete Beblasungsdüse erzeugt wird. Dazu ist der Beblasungsimpuls (Gasstrom) in Richtung des abfließenden Werkstoffs gerichtet, also in Längsrichtung der Rinnenelemente und bewirkt ein Anblasen des Werkstoffs. Hierdurch wird ein vollständiges Entfernen des Werkstoffs aus den Rinnenelementen vor dem vollständigen Erstarren gefördert.

Es ist weiter vorteilhaft, wenn der Querschnitt des Gasstroms bezüglich seiner Form dem Querschnitt des Flüssigkeitsstroms ähnlich ist, zumindest in Teilbereichen und insbesondere im Bereich des Bodens der Rinne, und wenn das Gas aufgrund seines Impulses den Werkstoff aus der Rinne verdrängt. Da das Erstarren des Werkstoffs während einer kurzen Zeit erfolgt, ist auch die Dauer des Beblasungsimpulses kurz; bei erstarrenden Metallen beispielsweise unter einer Sekunde. Es ist bei dem genannten Verfahren wichtig, dass der Beblasungsimpuls erst nach der Unterbrechung des Werkstoffflusses erzeugt wird und zu einem Zeitpunkt, zu dem der Werkstoff in der Förderrinne noch nicht vollständig erstarrt ist, so dass er noch verformbar ist und in einem oder wenigen verformten Teilen aus den Rinnenelementen herausbewegt werden kann. Der Zeitpunkt des Beblasens ist vorzugsweise auch so gewählt, dass das Restmaterial nicht in viele Kleinmengen/Tropfen zerstiebt, sondern wenigstens teilweise zusammenhängt, so dass es in einem oder wenigen großen Teilen aus den Rinnenelementen herausbewegt wird.

Der Beblasungsimpuls kann beispielsweise durch Druckluftbeaufschlagung einer Düse erzeugt werden.

Es kann vorteilhaft sein, die Förderrinne aus Teilstücken in Form von Rinnenelementen aufzubauen, die ineinander eingelegt sind, sodass sich Stufen ergeben. Dann kann der Beblasungsimpuls von einer Stufenflanke im Boden der Rinne ausgehen und insbesondere in Werkstoffflussrichtung gerichtet sein, weiter vorzugsweise auf den Boden der Rinnenelemente oder parallel zum Boden eines Rinnenelements gerichtet.

In einer besonderen Ausführungsform kann auch vorgesehen sein, dass mehrere Beblasungsimpulse von verschiedenen Beblasungsdüsen gleichzeitig oder nacheinander ausgestoßen werden.

Werden die Beblasungsimpulse aus verschiedenen Beblasungsdüsen nicht gleichzeitig ausgestoßen, so kann vorgesehen sein, dass die Beblasungsimpulse aus einer oder mehreren Beblasungsdüsen, die in der Rinne bezüglich des Werkstoffflusses stromaufwärts angeordnet sind, zeitlich vor den Beblasungsimpulsen erfolgen, die aus Beblasungsdüsen ausgestoßen werden, die weiter stromabwärts angeordnet sind. Der Versatz der verschiedenen Beblasungsimpulse kann beispielsweise weniger als 2 Sekunden, insbesondere weniger als 1 Sekunde betragen. Die Beblasungsdüsen können entlang der Rinne in deren Längsrichtung im Abstand von einigen Zentimetern bis einigen Dezimetern angebracht sein. Dabei kann der Mindestabstand zwischen zwei Düsen in Längsrichtung der Rinne insbesondere 20 bis 100 Zentimeter betragen.

Die Dauer des Beblasungsimpulses kann auch verlängert werden, um - beispielsweise nach Ende eines Dosiervorgangs - feste Verunreinigungen aus der Rinne zu blasen oder um die Rinne mit einem Inertgas zu beaufschlagen.

Bei Dosieröfen mit Steigrohr kann zudem vorgesehen sein, dass zusätzlich zu dem oder den vom Boden der Rinnenelemente ausgehenden Beblasungsimpuls(en) eine an einem Dosierrohr angeordnete Auslaufkante beblasen wird, über die der durch das Dosierrohr aus einem Behälter geförderte geschmolzene Werkstoff strömt. Durch diese Ausgestaltung wird insbesondere die Auslaufkante im Bereich des Steigrohrs zu den folgenden Rinnenelementen hin frei von Resten an erstarrtem Werkstoff gehalten. Das Beblasen der Auslaufkante kann auch zu einer günstigen Bewegung des Restwerkstoffes nach der Dosierung aus der Auslaufrinne heraus beitragen.

Im Folgenden wird die Erfindung anhand von Ausführungsbeispielen in Figuren einer Zeichnung gezeigt und anschließend beschrieben. Dabei zeigt
- Fig. 1: eine Teilansicht eines Dosierofens mit Steigrohr im Querschnitt,
- Fig. 2: eine längsgeschnittene Ansicht von Rinnenelementen mit Stufen und Düsen,
- Fig. 3: ein Zeitschema mit der zeitlichen Aufeinanderfolge von Beblasungsimpulsen,
- Fig. 4: eine stirnseitige Ansicht einer Stufenflanke mit einer Beblasungsdüsenmündung in einer ersten Ausführungsform, sowie
- Fig. 5: eine Ansicht einer Beblasungsdüsenmündung in einer zweiten Ausführungsform.

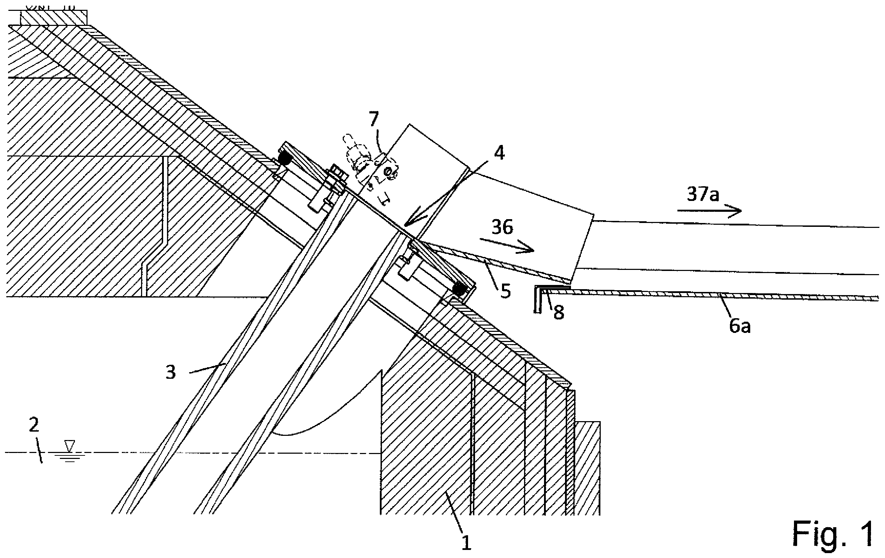

Figur 1 zeigt einen Teil eines Dosierofens 1, der in Form eines Behälters eine Metallschmelze 2 enthält. Ein Steigrohr 3 ist gasdicht in die Wand des Behälters eingepasst und ragt in die Metallschmelze 2 hinein.

Im gezeigten Beispiel wird während des Dosiervorgangs die Metallschmelze durch das Steigrohr herausgedrückt und läuft über die Auslaufkante 4 in die Auslaufrinne 5, die ein erstes Rinnenelement bildet und von dort weiter in ein Förderrinnenelement 6a,welches ein zweites Rinnenelement bildet, wobei die Rinnenelemente zusammen eine Rinne bilden, welche beispielsweise zu einer Gussform führt.

Die Auslaufrinne 5 (das erste Rinnenelement) kann beispielsweise mit dem Dosierrohr 3 zusammenhängen und auch mit diesem einstückig hergestellt sein.

Wie bereits aus dem Stand der Technik bekannt ist, kann die Beblasung der Auslaufkante 4 durch die Düse 7 dafür sorgen, dass sich an der Auslaufkante keine Metallablagerungen festsetzen.

Im Verlauf der Rinnenelemente 5, 6a sind an den stufenförmigen Übergängen Beblasungsdüsen 8 vorgesehen. Der Werkstofffluss, im vorgestellten Beispiel der Metallschmelzfluss, fließt üblicherweise über die Beblasungsdüse 8 hinweg in Längsrichtung 37 der Rinne 6a.

Nach dem Ende eines Dosiervorgangs, wenn der Fluss von geschmolzenem Metall über die Auslaufkante 4 abreißt, bleibt etwas von dem geschmolzenen Metall entlang der Auslaufrinne in Form eines Metallfadens am Grund der Rinne liegen, der mittels der Beblasung über die Beblasungsdüse 8 zuverlässig und vollständig entfernt werden kann, wenn die Beblasung zum richtigen Zeitpunkt und in der richtigen zeitlichen Abfolge stattfindet.

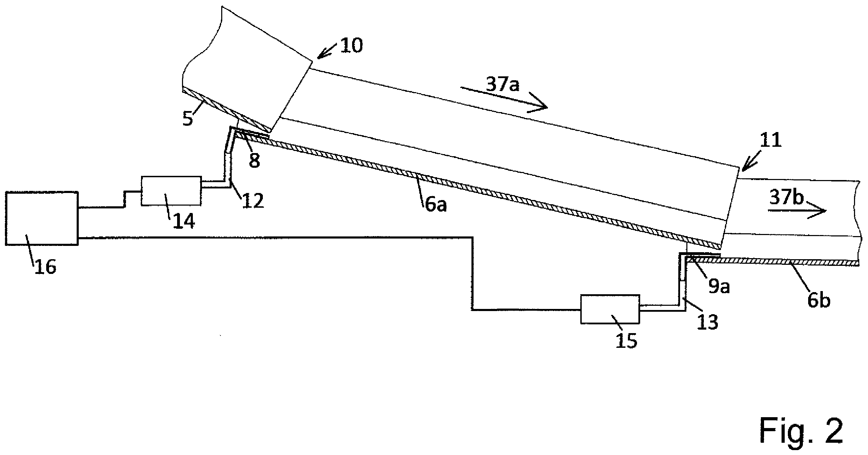

In Figur 2 sind in einem Längsschnitt mehrere Rinnenelemente (Auslauf- 5 und Förderrinne 6a, 6b) dargestellt, die derart ineinandergesteckt sind, dass in den Übergangsbereichen Stufen 10, 11 entstehen. Der Werkstofffluss des flüssigen Metalls bewegt sich in Richtung des Pfeils 37a bzw. 37b. Im Bereich der Stufen 10, 11 ist jeweils eine Düse 8, 9a dargestellt, wobei die Mündung der Beblasungsdüsen 8, 9a in der fallenden Flanke der jeweiligen Stufe angeordnet ist.

Die Beblasungsdüsen 8, 9a sind jeweils an Gasleitungen 12, 13 angeschlossen, die jeweils durch ein Ventil 14, 15 derart angesteuert werden, dass sie nacheinander, beginnend mit der Beblasungsdüse 8, einen Gasstromimpuls (Beblasungsimpuls) ausstoßen. Die Ventile 14, 15 werden von einer Steuereinrichtung 16 angesteuert, die mit der Dosiereinrichtung 1 verbunden ist, so dass der zeitliche Verlauf der Beblasungsimpulse in Abhängigkeit von dem Ende eines Dosiervorgangs gesteuert werden kann. Die Beblasungsdüsen umfassen jeweils die Enden von Leitungen, durch die das Beblasungsfluid fließt, wobei die Enden der Leitungen jeweils zwischen zwei aufeinandergelegten Rinnenelementen im Endbereich des einen Rinnenelementes angeordnet sind. In dem Bereich, in dem die Düsen angeordnet sind, kann jeweils wenigstens ein Rinnenelement eine Ausnehmung aufweisen, die die Beblasungsdüse aufnimmt.

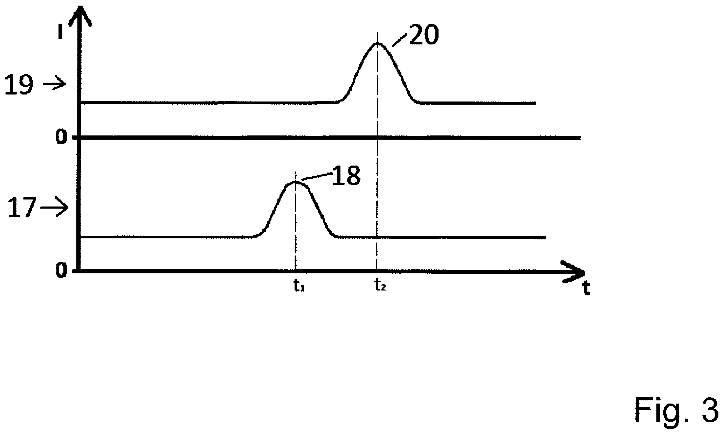

In Figur 3 ist in einem Diagramm der zeitliche Verlauf der verschiedenen Beblasungsimpulse der unterschiedlichen Beblasungsdüsen gezeigt. Im untersten Teildiagramm 17 ist der Beblasungsverlauf der Beblasungsdüse 8 dargestellt. Wird der Zeitpunkt des Endes einer Dosierung mit t = 0 angenommen, so findet der erste Beblasungsimpuls, dargestellt durch die Kurvenform 18, zum Zeitpunkt t₁ statt.

Darauffolgend wird, wie im Diagramm 19 dargestellt, die Beblasungsdüse 9a aktiviert, so dass zum Zeitpunkt t₂ aus dieser ein Beblasungsimpuls erfolgt, der durch den Peak 20 dargestellt ist.

Aus den Diagrammen der Figur 3 ist zudem ersichtlich, dass in diesem Beispiel die Gasströmung aus den Beblasungsdüsen 8, 9a dargestellt in den Diagrammen 17, 19 nicht auf null zurückgeht, sondern dass eine bestimmte Druckgasmenge kontinuierlich aus den Beblasungsdüsen 8, 9a ausströmt. Hierdurch wird das Verstopfen dieser Beblasungsdüsen durch flüssiges Metall im Betrieb verhindert. Es ist jedoch auch möglich, die Beblasungsstärke zwischen den Beblasungsimpulsen auf null zu reduzieren.

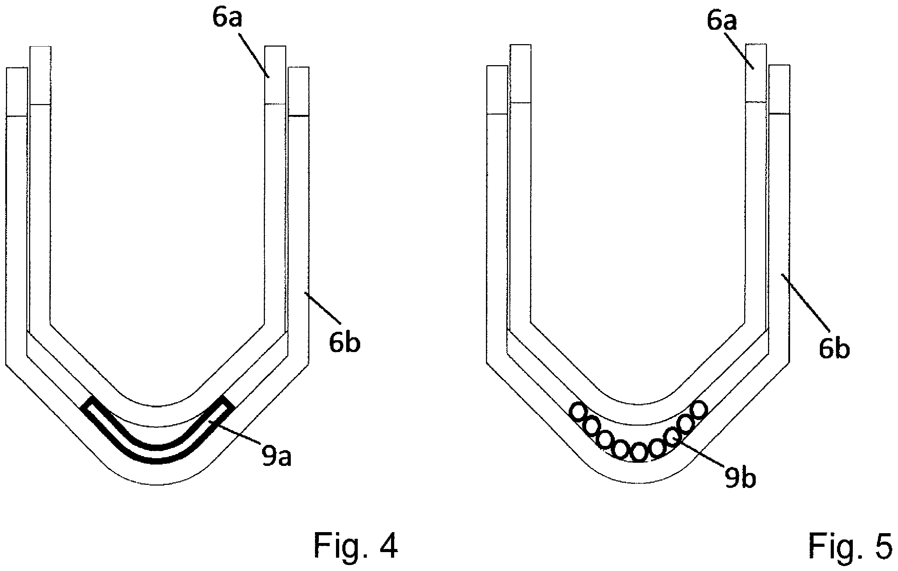

In Figur 4 und Figur 5 ist jeweils eine Frontalansicht der Stirnseite der Stufe 11 und des Rinnenelementes 6a in verschiedenen Ausführungsformen gezeigt. Der Verlauf der Mündung der Beblasungsdüse ist im Querschnitt der Rinnenelemente 6a, 6b V-förmig. Der Verlauf der Mündung der Beblasungsdüse kann jedoch auch kreisringsegmentförmig oder spitz zulaufend V-förmig ausgestaltet sein. Es ist möglich, die Düsenmündung in Teilsegmente zu unterteilen (siehe Figur 5) und jedes Teilsegment einzeln anzusteuern. Die Breite der Öffnung der Beblasungsdüsenmündung kann über den Verlauf des Querschnitts der Mündung variabel sein.

Die einzelnen Beblasungsdüsenmündungen der Beblasungsdüsen 8, 9a können unterschiedlich sein, sie können jedoch auch gleichartig gestaltet sein.

Die Erfindung erlaubt eine effektive und effiziente Beblasung einer Auslaufrinne einer Dosiervorrichtung derart, dass Metallreste am Ende eines Dosiervorgangs weitgehend entfernt werden können, so dass ein nachfolgender Gießvorgang nicht gestört wird.

## Patentansprüche

1. Vorrichtung zum Dosieren oder diskontinuierlichen Fördern von flüssigem oder geschmolzenem Werkstoff mit einem oder mehreren Rinnenelementen (5, 6a, 6b) zur Leitung des Werkstoffs **dadurch gekennzeichnet, dass** an einem Boden mindestens eines der Rinnenelemente wenigstens eine Beblasungsdüse (8, 9a, 9b) angeordnet ist.

2. Vorrichtung nach Anspruch 1, **dadurch gekennzeichnet, dass** die Beblasungsdüse(n) (8, 9a, 9b) in einem Bereich der Rinnenelemente (5, 6a, 6b) angeordnet ist/sind, der im Betrieb von dem fließenden Werkstoff bedeckt ist und der unterhalb des fließenden Werkstoffs liegt.

3. Vorrichtung nach Anspruch 1 oder 2, **dadurch gekennzeichnet, dass** die Mündung(en) der Beblasungsdüse(n) (8, 9a, 9b) derart ausgerichtet ist/sind, dass ein durch sie ausgestoßener Fluidstrom in Längsrichtung (37a, 37b) der Rinnenelemente (6a, 6b) und im Richtungssinn des Werkstoffflusses ausgestoßen wird.

4. Vorrichtung nach Anspruch 1, 2 oder 3, **dadurch gekennzeichnet, dass** die Mündung(en) der Beblasungsdüse(n) (8, 9a, 9b) derart ausgerichtet ist/sind, dass die Richtung eines durch sie ausgestoßenen Fluidstroms von der Längsrichtung (36, 37a, 37b) der Rinnenelemente (5, 6a, 6b) in Werkstoffflussrichtung höchstens um einen Winkel abweicht, der kleiner als 15 Grad ist, wobei die Richtung des Fluidstroms zum Boden der Rinnenelemente gerichtet ist.

5. Vorrichtung nach Anspruch 1 oder einem der folgenden, **dadurch gekennzeichnet, dass** die Rinnenelemente (5, 6a, 6b) im Verlauf ihres Bodens in Werkstoffflussrichtung eine oder mehrere fallende Stufen (10, 11) aufweisen und dass wenigstens eine Beblasungsdüse (8, 9a) an einer Stufe angeordnet ist.

6. Vorrichtung nach Anspruch 5, **dadurch gekennzeichnet, dass** an einer oder mehreren Stufen (10, 11) jeweils eine Beblasungsdüse (8, 9a) an der fallenden Stufenflanke mündet.

7. Vorrichtung nach Anspruch 5 oder 6, **dadurch gekennzeichnet, dass** wenigstens eine Stufe (10, 11) dadurch gebildet ist, dass ein erstes Rinnenelement (5 bzw. 6a) oder ein Rohr in ein von diesem aus gesehen in Werkstoffflussrichtung weiter stromabwärts liegendes Rinnenelement (6a bzw. 6b) eingesteckt oder auf dieses aufgelegt ist.

8. Vorrichtung nach Anspruch 1, **dadurch gekennzeichnet, dass** die Beblasungsdüse(n) (8, 9a) schlitzförmig ausgebildet ist/sind, wobei der Schlitz gekrümmt ist und wobei der Schlitz in derselben Richtung gekrümmt ist wie im Querschnitt der Boden der Rinnenelemente (6a, 6b).

9. Vorrichtung nach Anspruch 1 oder einem der folgenden, **dadurch gekennzeichnet, dass** die Vorrichtung einen Behälter (1) mit einem in den im Behälter befindlichen Werkstoff (2) hineinragenden Steigrohr (3) sowie mit einer Vorrichtung zur Förderung des Werkstoffes durch das Steigrohr und mit einem ersten Rinnenelement in Form einer Auslaufrinne (5) für den Werkstoff aufweist, die von dem Dosierrohr (3) über eine Auslaufkante (4) zu weiteren Rinnenelementen (5a und 5b) führt.

10. Verfahren zum diskontinuierlichen Fördern oder Dosieren eines geschmolzenen Werkstoffes, **dadurch gekennzeichnet, dass** der geschmolzene Werkstoff durch ein oder mehrere Rinnenelemente (5, 6a, 6b) geleitet wird, dass der Werkstofffluss unterbrochen wird und dass darauf folgend und vor dem vollständigen Erstarren von Werkstoff in oder an wenigstens einem Rinnenelement ein Beblasungsimpuls durch eine an einem Boden mindestens eines der Rinnenelemente angeordnete Beblasungsdüse (8, 9a, 9b) erzeugt wird.

11. Verfahren nach Anspruch 10, **dadurch gekennzeichnet, dass** der Beblasungsimpuls von einer Stufenflanke des Bodens der Rinnenelemente ausgeht und in Werkstoffflussrichtung (36, 37a, 37b) auf den Boden der Rinnenelemente oder parallel zum Boden eines Rinnenelementes (5, 6a, 6b) gerichtet ist.

12. Verfahren nach Anspruch 10 oder 11, **dadurch gekennzeichnet, dass** mehrere Beblasungsimpulse (18, 20) von verschiedenen Beblasungsdüsen (8, 9a) gleichzeitig oder nacheinander ausgestoßen werden.

13. Verfahren nach Anspruch 10 oder einem der folgenden, **dadurch gekennzeichnet, dass** zusätzlich zu dem oder den vom Boden der Rinnenelemente (5, 6a, 6b) ausgehenden Beblasungsimpuls(en) (18, 20) eine an einem Dosierrohr (3) angeordnete Auslaufkante (4) beblasen wird, über die der durch das Dosierrohr (3) aus einem Behälter geförderte geschmolzene Werkstoff strömt.

## Claims

1. A device for dosing or discontinuously delivering liquid or molten material comprising one or more launder elements (5, 6a, 6b) for guiding the material, **characterized in that** at least one blasting nozzle (8, 9a, 9b) is disposed on at least one of the launder elements on the bottom thereof.

2. The device according to claim 1, **characterized in that** the blasting nozzle(s) (8, 9a, 9b) is or are disposed in a region of the launder elements (5, 6a, 6b) which, during operation, is covered by the flowing material and which is located beneath the flowing material.

3. The device according to claim 1 to 2, **characterized in that** the opening(s) of the blasting nozzle(s) (8, 9a, 9b) is or are oriented in such a way that a fluid stream ejected thereby is ejected in the longitudinal direction (37a, 37b) of the launder elements (6a, 6b), and in the sense of direction of the material flow.

4. The device according to claim 1, 2 or 3, **characterized in that** the opening(s) of the blasting nozzle(s) (8, 9a, b) is or are oriented in such a way that the direction of a fluid stream ejected thereby deviates from the longitudinal direction (36, 37a, 37b) of the launder elements (5, 6a, 6b) in the material flow direction by no more than an angle of 15 degrees, wherein the direction of the fluid stream is directed toward the bottom of the launder elements.

5. The device according to claim 1 or one of those that follow, **characterized in that** the launder elements (5, 6a, 6b) comprise one or more down steps (10, 11) over the progression of the bottom thereof in the material flow direction, and that at least one blasting nozzle (8, 9a) is disposed on a step.

6. The device according to claim 5, **characterized in that** a respective blasting nozzle (8, 9a) opens into the down step flank on one or more steps (10, 11).

7. The device according to claim 5 or 6, **characterized in that** at least one step (10, 11) is formed **in that** a first launder element (5 or 6a) or a tube is inserted into or placed onto a launder element (6a or 6b) located further downstream thereof, seen in the material flow direction.

8. The device according to claim 1, **characterized in that** the nozzle(s) (8, 9a) has or have a slot-shaped cross-section, wherein the slot is curved, and wherein the slot furthermore is curved in the same direction as the cross-section of the bottom of the launder elements (6a, 6b).

9. The device according to claim 1 or one of those that follow, **characterized in that** the device comprises a receptacle (1) including a riser tube (3) protruding into the material (2) present in the receptacle, and comprising a device for delivering the material through the riser tube, and including a first launder element in the form of an outflow launder (5) for the material, which leads from the dosing tube (3) via an outflow launder (4) to further launder elements (5a and 5b).

10. A method for discontinuously delivering or dosing a molten material, **characterized in that** the molten material is guided through one or more launder elements (5, 6a, 6b), that the material flow is interrupted, and that thereafter, and prior to the material fully solidifying, a blast pulse is generated in or on at least one launder element by a blasting nozzle (8, 9a, 9b) disposed on at least one of the launder elements on the bottom thereof.

11. The method according to claim 10, **characterized in that** the blast pulse originates from a step flank in the bottom of the launder elements and is directed in the material flow direction (36, 37a, 37b) at the bottom of the launder elements or parallel to the bottom of a launder elements (5, 6a, 6b).

12. The method according to claim 10 or 11, **characterized in that** a plurality of blast pulses (18, 20) are ejected simultaneously or consecutively by different blasting nozzles (8, 9a).

13. The method according to claim 10 or any one of those that follow, **characterized in that**, in addition to the blast pulse(s) (18, 20) originating from the bottom of the launder elements (5, 6a, 6b), blasting takes place at an outflow edge (4) disposed on a dosing tube (3), across which the molten material flows which is delivered through the dosing tube (3) from a receptacle.

## Revendications

1. Dispositif de dosage ou de transport discontinu d'une matière liquide ou fondue avec un ou plusieurs éléments formant des rigoles (5, 6a, 6b) pour le guidage de la matière, **caractérisé en ce qu'**au moins une buse de soufflage (8, 9a, 9b) est disposée sur le fond d'au moins un des éléments formant des rigoles.

2. Dispositif selon la revendication 1, **caractérisé en ce que** la(les) buse(s) de soufflage (8, 9a, 9b) est/sont disposée(s) dans une région des éléments formant des rigoles (5, 6a, 6b) qui est recouverte par la matière s'écoulant en cours de fonctionnement et qui se situe en-dessous de la matière s'écoulant.

3. Dispositif selon la revendication 1 ou la revendication 2, **caractérisé en ce que** la(les) embouchure(s) de la/des buse(s) de soufflage (8, 9a, 9b) est/sont orientée(s) de telle manière qu'un flux de fluide expulsé par celle(s)-ci est poussé vers l'extérieur dans la direction longitudinale (37a, 37b) des éléments formant des rigoles (6a, 6b) et dans le sens de la direction du flux de matière.

4. Dispositif selon les revendications 1, 2 ou 3, **caractérisé en ce que** la(les) embouchure(s) de la/des buse(s) de soufflage (8, 9a, 9b) est/sont orientée(s) de telle manière que la direction d'un flux de fluide expulsé par celle(s)-ci dévie par rapport à la direction longitudinale (36, 37a, 37b) des éléments formant des rigoles (5, 6a, 6b) dans le sens du flux de matière au plus d'un angle qui est inférieur à 15 degrés, la direction du flux de fluide étant orientée vers le fond des éléments formant des rigoles.

5. Dispositif selon la revendication 1 ou l'une des suivantes, **caractérisé en ce que** les éléments formant des rigoles (5, 6a, 6b) présentent un ou plusieurs dénivelés (10, 11) vers le bas dans le parcours de leur fond dans la direction du flux de matière et qu'au moins une buse de soufflage (8, 9a) est disposée sur un dénivelé.

6. Dispositif selon la revendication 5, **caractérisé en ce que** chaque fois une buse de soufflage (8, 9a) débouche au niveau d'un flanc de dénivelé descendant sur un ou plusieurs dénivelés.

7. Dispositif selon la revendication 5 ou la revendication 6, **caractérisé en ce qu'**au moins un dénivelé (10, 11) est formé par le fait qu'un premier élément formant une rigole (5, respectivement, 6) ou un tuyau est inséré dans un élément formant une rigole (6a, respectivement 6b) situé en aval par rapport à celui-ci, vu dans la direction du flux de matière, ou est posé sur celui-ci.

8. Dispositif selon la revendication 1, **caractérisé en ce que** la(les) buse(s) de soufflage (8, 9a) est/sont conçue(s) en forme de fente(s), où la fente est recourbée et où la fente est recourbée dans la même direction, comme dans la section transversale des fonds des éléments formant des rigoles (6a, 6b).

9. Dispositif selon la revendication 1 ou l'une des suivantes, **caractérisé en ce que** le dispositif présente un récipient (1) avec un tube ascensionnel (3) plongeant dans la matière (2) se trouvant dans le récipient, ainsi qu'avec un dispositif pour le transport de la matière dans le tube ascensionnel et avec un premier élément formant une rigole sous la forme d'une rigole d'écoulement (5) pour la matière qui mène du tuyau de dosage (3) vers des autres éléments formant des rigoles (5a et 5b) par le biais d'une arête d'écoulement (5).

10. Procédé de transport discontinu ou de dosage d'une matière fondue, **caractérisé en ce que** la matière fondue est guidée à travers un ou plusieurs éléments formant des rigoles (5, 6a, 6b), que le flux de matière est interrompu et que, ensuite et avant le figeage complet de la matière dans ou à au moins un des éléments formant des rigoles, une impulsion de soufflage est créée par une buse de soufflage (8, 9a, 9b) disposée sur un fond d'au moins un des éléments formant des rigoles.

11. Procédé selon la revendication 10, **caractérisé en ce que** l'impulsion de soufflage part d'un flanc de dénivelé du fond des éléments formant des rigoles et est orienté dans la direction du flux de matière (36, 37a, 37b) sur le fond des éléments formant des rigoles ou parallèlement par rapport au fond d'un élément formant une rigole (5, 6a, 6b).

12. Procédé selon la revendication 10 ou la revendication 11, **caractérisé en ce que** plusieurs impulsions de soufflage (18, 20) sont expulsées simultanément ou l'une après l'autre de diverses buses de soufflage (8, 9a).

13. Procédé selon la revendication 10 ou l'une des suivantes, **caractérisé en ce que**, complémentairement à l'impulsion ou aux impulsions de soufflage (18, 20) sortant du fond des éléments formant des rigoles (5, 6a, 6b), une arête d'écoulement (4) disposée sur un tuyau de dosage (3) est soumise au soufflage, par laquelle la matière fondue transportée à travers le tuyau de dosage (3) s'écoule hors d'un récipient.
